# NEW EUROPEAN PATENT SPECIFICATION

(11) **EP 2 278 284 B2**
(45) Date of publication and mention of the opposition decision: **16.10.2024**
(45) Mention of the grant of the patent: 16.05.2018
(21) Application number: 10011970.0
(22) Date of filing: 03.03.2006
(51) Int. Cl.: G01G 19/393, G01G 13/24, G01G 13/02

(54) **Weighing arrangement**
Wägeeinheit
Agencement de pesée

(30) Priority: 03.03.2005 EP 05388019
(43) Date of publication of application: 26.01.2011
(62) Divisional of application: 06706101.0
(73) Proprietor: CABINPLANT INTERNATIONAL A/S, 5683 Haarby (DK)
(72) Inventor: Hansen, Henning Ingemann, 5683 Haarby (DK)
(74) Representative: Budde Schou A/S

(56) References cited:
- WO-A1-2004/005170
- FR-A1- 2 266 875
- US-A- 4 872 546
- US-A- 5 143 166
- US-A- 5 143 166
- US-A- 5 340 949
- US-A- 5 350 089

## Description

### TECHNICAL FIELD

The present invention relates to a weighing arrangement such as a multihead weigher comprising an infeed or storage hopper (both to be named as infeed) for product material to be weighed, and at least one dosing mechanism for controlled conveying of product material portions from said infeed to a weighing system.

### BACKGROUND ART

In weighing arrangements of this kind it is known to use a dosing or batching mechanism comprising vibratory pans positioned as a trough for conveying product material from the infeed to the weighing system and to control the vibration in time and intensity in order to deliver a desired portion of product material to the weighing system. Such weighing arrangement can be used for a broad range of product materials, as long as the product materials can be conveyed by vibration in a sufficiently stable and organised manner. An alternative way of providing the delivery of desired portions of product material to a weighing system is to provide a screw conveyor in a tubular housing, which is suitable for controlled transport of particulate or pulverulent materials, such as e.g. known from EP 1 439 379. However, normal screw conveyors impose a relatively high mechanical influence on the product material. Such mechanical influence should, however, be avoided in connection with sensitive products. Thus, in connection with sensitive, sticky and/or flexible product materials, such as poultry, fish, fresh meat, marinated meat and corresponding lumpy and/or sticky materials, neither the vibrational nor the screw conveyor conveyance of the product material will be sufficiently stable, well-defined, and gentle, and will, thus, not be providing the required conveyance of these types of products.

From FR 2 226 875 is known a method for the weighing of sticky and toxic materials comprising a supply means consisting of a sealed conduit and a helicoids. The aforementioned conduit being equipped with a vibrator.

From US 5,143,166 is known a micro weighing system, in which an infeed hopper is connected to a non-constant pitch screw conveyor encased within a closed tubular housing.

From US 4,872,546 is known a screw conveyor device for pourable material has a tubular or hose-like housing and a feed coil consisting of wire or strip material.

From WO 2004/005170 is known a conveyor system in which a non-constant pitch screw conveyor is located below a hopper and delivers the material to a tubular outlet.

### DISCLOSURE OF THE INVENTION

It is the object of the present invention to provide a weighing arrangement of the kind referred to above, with which it is possible to provide a well-defined conveyance of product materials, which are not suited for vibrational conveyance, and this object is achieved with a weighing arrangement for weighing sticky and/or flexible product material, such as fresh meat, marinated meat, poultry, fish and corresponding lumpy and/or sticky materials, which according to the present invention comprises the features set forth in claim 1. Said arrangement comprises motor-driven transport screws formed as a helically shaped rod and providing a well-defined conveyance of product material from the infeed to the weighing system, even if the product material is sticky and/or flexible, or for other reasons is not suited for vibrational conveyance.

The positioning of the screw in an open trough provides a gentle conveyance, without imposing any significant mechanical influence or pressure on the product material.

### BRIEF DESCRIPTION OF THE DRAWINGS

In the following detailed part of the present description, the invention will be explained in more detail with reference to the exemplary embodiment of a weighing system according to the invention shown in the drawings, in which
Fig. 1 shows a top view of the infeed for product material and eighteen motor-driven transport screws positioned in troughs for conveying the product material from the infeed to a weighing system (not shown),
Fig. 2 shows a cross sectional view of the arrangement in Fig. 1 along A-A,
Fig. 3 shows a detail in Fig. 2 indicating an example of a connection between the motor and the transport screw.

### DESCRIPTION OF THE PREFERRED EMBODIMENTS

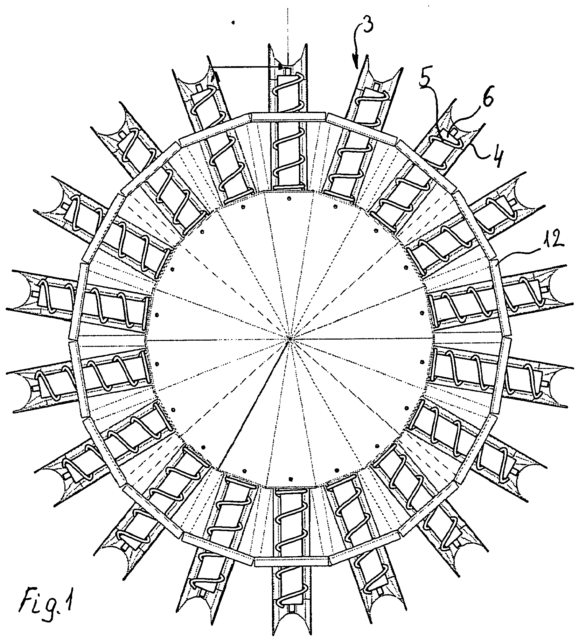

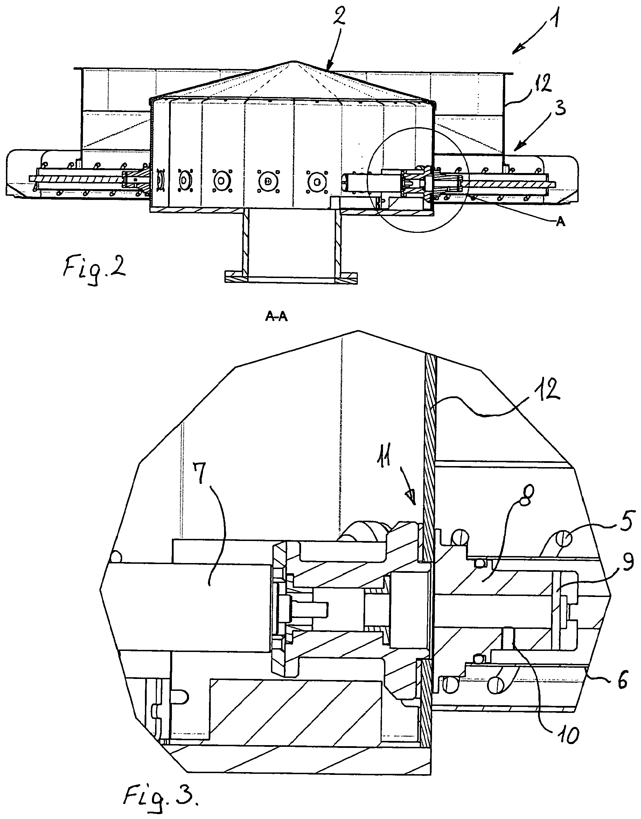

The apparatus shown in Fig. 1 comprises an infeed 1 having eighteen dosing mechanisms 3 positioned symmetrically along the circumference of the infeed 1. Each dosing mechanism 3 comprises a trough 4, in which a transport screw 5 in the form of a helically shaped rod is positioned and driven by a motor 7 (see Fig. 3). Positioned coaxially with the transport screw 5 is a core 6, which is not part of the present invention.

The infeed 1, shown in cross section in Fig. 2, comprises a conical central bottom part 2, which provides a distribution of product material towards the outer wall 12 of the infeed 1. The conical central bottom part 2 of the infeed ends at a distance from the outer wall 12 of the infeed and therebetween the product material falls down into the individual troughs 4, in which the transport screw 5 is positioned to convey product material out of the infeed 1 in a controlled manner in order to deliver controlled portions of product material to a weighing system positioned below the end of the trough 4.

Preferably, the helically shaped rod has an increasing pitch along its length in order to improve the gentle transport of the product material.

As shown in Fig. 3, the connection between the motor 7 and the transport screw 5 comprises a bushing 8 onto which the transport screw 5 is connected permanently, e.g. by welding, or said bushing 8 possibly being integrated into the core 6, which according to the invention is not present. The bushing 8 comprises a pin 9 providing a non-rotational connection to the motor-driven axle and a click-connection mechanism 10, e.g. provided by means of a spring and a ball, said ball being pressed into a recess provided in the motor axle.

In order to avoid leakage of product material from the trough 4 into the inner motor compartment, a sealing 11 is provided between the motor axle and the back wall of the trough 4.

The mounting of the motor 7 and possible provision of supplementary bearings for the axle of said motor is provided in a conventional way and needs no detailed explanation at this point.

The components in contact with the product material are preferably made of stainless steel, but other material choices can be made for different reasons, such as plastic materials, etc.

The shown apparatus functions in the following way. Product material to be weighed is conveyed to the infeed 1 in a controlled manner in order to keep a mainly constant level of product material in said infeed 1. The product material is distributed to the individual dosing mechanism 3 by the conical central bottom part 2 of the infeed. Suitable sloping surfaces between the individual troughs 4 of the dosing mechanism 3 may be provided in order to lead the product material into the individual troughs 4. The dosing mechanism 3 delivers predetermined portions of product material to the related weighing system by signals by the overall control for the weighing arrangement. The controlled, well-defined portion is delivered by the controlled speed of the motor 7 during a controlled period of time. In order to optimise the dosing, the subsequent weighing of the delivered portion is used to adjust the period of time and/or the motor speed in order to adjust the dosage of product material from each individual dosing mechanism 3.

Typical values for the rotational speed of the transport screw 5 are 10-100 revolutions per minute and typical period of running times are between 50 and 2000 ms.

The following weighing and combination of dosed partial portions to final portions shall be as close as possible to the desired weight of the final portions by combining a predetermined number of dosed and weighed portions, is well-known within the art and need not be explained in further detail.

Above, the invention has been described and explained in connection with a specific embodiment thereof, as shown in the drawings, however, it should be noted that the invention requires completely removing the core 6 shown in the drawings. It will also be evident that the opening in the side 12 of the infeed 1, through which the trough 4 extends, has to be adapted to the product material to be conveyed by the dosing mechanism 3.

## Claims

1. Weighing arrangement for weighing sticky and/or flexible product material, such as fresh meat, marinated meat, poultry, fish and corresponding lumpy and/or sticky materials, comprising
- an infeed (1) for product material to be weighed,
- at least one dosing mechanism (3) for controlled conveying of product material portions from said infeed (1) to a weighing system,
- said dosing mechanism (3) comprising a motor-driven (7) transport screw (5) formed as a helically shaped rod positioned in an open trough (4), for conveying the product material from the infeed (1) to the weighing system and a control unit for controlling the motor in order to deliver a desired portion of product material to the weighing system, said weighing arrangement having no core inside the transport screw, **characterised in that** said infeed (1) comprises a conically formed central bottom part (2) leading the product material radially outwards to several dosing mechanisms (3) positioned in a circular pattern around the conical bottom (2), wherein the motors (7) for driving the transport screws are positioned under the conical bottom part (2) of the infeed (1).

2. Weighing arrangement in accordance with any of the claim 1, wherein said trough (4) comprises a bottom part having a cylindrical form with a diameter corresponding to or larger than the outer diameter of the transport screw (6).

3. Weighing arrangement in accordance with claim 2, wherein said trough (5) extends through an opening in the side of the infeed (4).

4. Weighing arrangement in accordance with any of the claims 1-3, wherein the connection between the transport screw (5) and the motor comprises a clip-on mechanism for easy assembly, disassembly, cleaning and exchange of transport screw (5) .

5. Weighing arrangement in accordance with any of the claims 1-4, wherein said motor (7) is controlled in speed and running time by the controller.

6. Weighing arrangement in accordance with claim 5, wherein said controller is connected to receive information on the weight of the material portions and adapted to adjust the speed and/or running time in dependence thereof.

7. Weighing arrangement in accordance with any of the claims 1-6, wherein said arrangement comprises 2-40 dosing mechanisms (3), such as 2-4, 4-8, 8-16, 16-40, e.g. 10-20, 20-40, preferably 16 or 18 dosing mechanisms.

## Patentansprüche

1. Wägeanordnung zum Wiegen von klebrigen und/oder biegsamen Produktmaterialien, wie zum Beispiel frischem Fleisch, mariniertem Fleisch, Geflügel, Fisch und entsprechenden klumpigen und/oder klebrigen Materialien, umfassend
- eine Zuführung (1) für zu wiegendes Produktmaterial,
- mindestens einen Dosiermechanismus (3) zum gesteuerten Fördern von Produktmaterialportionen von der Zuführung (1) zu einem Wiegesystem,
- wobei der Dosiermechanismus (3) eine motorbetriebene (7) Förderschraube (5) umfasst, die als eine schraubenförmige Stange ausgebildet ist, die in einer offenen Mulde positioniert ist, um Produktmaterial von der Zuführung (1) zum Wiegesystem zu befördern, und eine Steuereinheit zum Steuern des Motors, um eine gewünschte Portion Produktmaterial zum Wiegesystem zu liefern, wobei die Wägeanordnung keinen Kern in der Förderschraube umfasst, **dadurch gekennzeichnet, dass** die Zuführung (1) einen kegelförmigen zentralen Bodenteil (2) umfasst, der das Produktmaterial radial auswärts führt zu mehreren Dosiermechanismen (3), die in einem kreisförmigen Muster positioniert sind um den kegelförmigen Boden (2) herum, wobei die Motoren (7), die die Förderschrauben treiben, unter dem kegelförmigen Bodenteil (2) der Zuführung (1) positioniert sind.

2. Wägeanordnung nach Anspruch 1, wobei die Mulde (4) einen Bodenteil umfasst, der eine zylindrische Form mit einem Durchmesser hat, der den Außendurchmesser der Transportschraube (6) entspricht oder größer ist.

3. Wägeanordnung nach Anspruch 2, wobei sich die Mulde (5) durch eine Öffnung in der Seite der Zuführung (4) erstreckt.

4. Wägeanordnung nach einem der Ansprüche 1-3, wobei die Verbindung zwischen der Förderschraube (5) und dem Motor einen Clipsmechanismus zum leichten Zusammenfügen, Auseinandernehmen, Reinigen und Austauschen der Förderschraube (5) umfasst.

5. Wägeanordnung nach einem der Ansprüche 1-4, wobei der Motor (7) hinsichtlich der Drehzahl und Betriebszeit von dem Controller gesteuert wird.

6. Wägeanordnung nach Anspruch 5, wobei der Controller angeschlossen, um Informationen zu dem Gewicht der Produktportionen zu empfangen und angepasst ist, um die Drehzahl und/oder Betriebszeit in Abhängigkeit davon zu regeln.

7. Wägeanordnung nach einem der Ansprüche 1-6, wobei die Anordnung 2-40 Dosiermechanismen (3), wie zum Beispiel 2-4, 4-8, 8-16, 16-40, zum Beispiel 10-20, 20-40, bevorzugt 16 oder 18 Dosiermechanismen umfasst.

## Revendications

1. Agencement de pesée pour peser du matériau de produit collant et/ou flexible, tel que de la viande fraîche, de la viande marinée, de la volaille, du poisson et des matériaux grumuleux et/ou collants similaires, comprenant
- une entrée d'alimentation (1) pour du matériau de produit à être pesé,
- au moins un mécanisme de dosage (3) pour le transport contrôlé de portions de matériau de produit de ladite entrée d'alimentation (1) à un système de pesée,
- le mécanisme de dosage (3) comprenant une vis de transport (5) entraîné par moteur (7) formé comme une tige en forme hélicoïdale positionnée dans une goulotte ouverte (4), pour le transport de matériau de produit de l'entrée d'alimentation (1) au système de pesée, et une unité de contrôle pour contrôler le moteur de manière à livrer une portion désirée de matériau de produit au système de pesée, ledit agencement de pesée n'ayant pas d'âme à l'intérieur de la vis de transport, **caractérisé en ce que** ladite entrée d'alimentation (1) comprend une partie inférieure centrale en forme conique (2) menant le matériau radialement vers l'extérieur à plusieurs mécanismes de dosage (3) positionnés en un schéma circulaire autour du fond de forme conique (2), où les moteurs (7) pour entraîner les vis de transport sont positionnées sous la partie de fond de forme conique (2) de l'entrée d'alimentation (1).

2. Agencement de pesée selon la revendication 1, dans lequel ladite goulotte (4) comprend une partie inférieure ayant une forme cylindrique avec un diamètre correspondant au diamètre extérieur de la vis de transport (6) ou supérieur à celle-ci.

3. Agencement de pesée selon la revendication 2, dans lequel la goulotte (5) s'étend à travers une ouverture dans le côté de l'entrée d'alimentation (4).

4. Agencement de pesée selon l'une quelconque des revendications 1 à 3, dans lequel la connexion entre la vis de transport (5) et le moteur comprend un mécanisme d'accrochage pour faciliter l'assemblage, le désassemblage, le nettoyage et l'échange du vis de transport (5).

5. Agencement de pesée selon l'une quelconque des revendications 1 à 4, dans lequel ledit moteur (7) est contrôlé en vitesse et temps de fonctionnement par le contrôleur.

6. Agencement de pesée selon la revendication 5, dans lequel le contrôleur est connecté pour recevoir de l'information sur le poids des portions du matériau, et adapté pour ajuster la vitesse et/ou le temps de fonctionnement qui en dépend.

7. Agencement de pesée selon l'une quelconque des revendications 1 à 6, dans lequel ledit agencement comprend de 2 à 40 mécanismes de dosage (3), tel que de 2 à 4, 4 à 8, 8 à 16, 16 à 40, par exemple de 10 à 20, 20 à 40, préférablement 16 ou 18 mécanismes de dosage.
